# EUROPEAN PATENT SPECIFICATION

(11) **EP 3 364 537 B1**
(45) Date of publication and mention of the grant of the patent: **10.03.2021**
(21) Application number: 18157465.8
(22) Date of filing: 19.02.2018
(51) Int. Cl.: H02P 6/15, H02P 6/182, H02P 6/14, H02P 27/08

(54) **METHOD FOR CONTROLLING WITH SIX-STEP COMMUTATION SCHEME A THREE-PHASE INVERTER CONFIGURED TO DRIVE A BRUSHLESS ELECTRIC MOTOR**
VERFAHREN ZUR STEUERUNG EINES DREI-PHASEN-INVERTERS MIT SIX-STEP KOMMUTIERUNG, DER ZUM ANTRIEB EINES BÜRSTENLOSEN ELEKTROMOTORS KONFIGURIERT IST
PROCÉDÉ DE COMMANDE D'UN INVERSEUR TRIPHASÉ AVEC SIX-STEP COMMUTATION, CONÇU POUR ENTRAÎNER UN MOTEUR ÉLECTRIQUE SANS BALAIS

(30) Priority: 20.02.2017 IT 201700018513
(43) Date of publication of application: 22.08.2018
(73) Proprietor: ELICA S.p.A., 60044 Fabriano (AN) (IT)
(72) Inventor: TOMEO, Giordan, I-60044 Fabriano, ANCONA (IT)
(74) Representative: Mozzi, Matteo

(56) References cited:
- EP-A2- 2 045 908
- US-A1- 2013 278 189
- US-A1- 2015 188 465
- "AN2009 APPLICATION NOTE PWM MANAGEMENT FOR 3-PHASE BLDC MOTOR DRIVES USING THE ST7MC", , 31 December 2009 (2009-12-31), XP055087100, Retrieved from the Internet: URL:http://www.st.com/st-web-ui/static/act ive/cn/resource/technical/document/applica tion_note/CD00041736.pdf [retrieved on 2013-11-07]

## Description

### Technical field

The present invention generally relates to the electronic control of the movement of electric motors. In particular, the invention relates to a method for controlling with a six-step commutation scheme a three-phase inverter configured to drive a brushless-type electric motor.

### Prior art

As known, a three-phase Brushless Direct Current or BLDC electric motor is a synchronous motor which comprises a stator having three phase conductors and a rotor, which may have from two to eight pairs of poles consisting of permanent magnets arranged either on or inside the rotor.

In such motors, the rotor operates as an induced element and is rotating, while the inductor element, i.e. the stator, is supplied by the alternating current voltages generated by an inverter device starting from the direct power voltage. In particular, such an inverter device is driven by an appropriate electronic control unit.

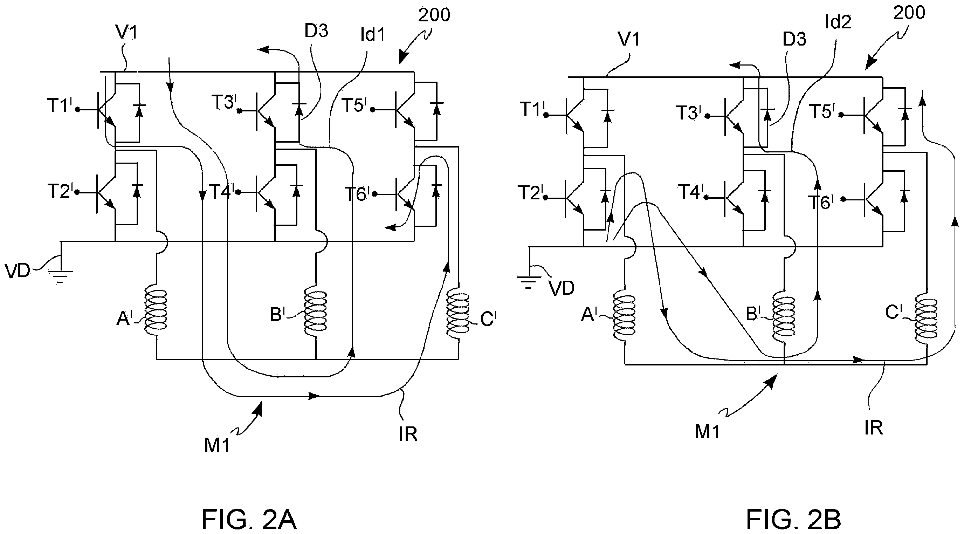

Figures 2A and 2B diagrammatically show an inverter device 200 configured to supply the conductor windings or phases A', B', C' of a three-phase BLDC motor M1. Such motors are synchronous because the supply voltage and the current are synchronized with the rotor position.

As known, the inverter device 200 controls the voltage and the current supplied to the motor M1 with a six-step commutation scheme, which is repeated cyclically. In particular, during each commutation step, the conductor windings A', B', C' of the stator can be alternatively connected either to a supply potential V1 or to a ground potential VD. With reference to figure 2A, in a first commutation step, the first conductor winding A' of the motor is at the supply potential V1 when the first transistor T1', e.g. of the IGBT (Insulated Gate Bipolar Transistor) type, is activated (ON) and the second transistor T2' is deactivated (OFF). Again, in the same commutation step, such a first conductor winding A' is at the ground potential VD if, on the contrary, the second transistor T2' is activated (ON) and the first T1' is deactivated (OFF). It is worth noting that in each commutation step only two of the conductor windings A', B', C' of the stator are supplied with the potentials V1, VD, while the third one remains not supplied.

According to a prior art, in order to adjust voltage and current delivered to the motor M1 at each commutation step, each transistor T1'-T6' of the inverter 200 is activated/deactivated by means of a pulse width modulation or PWM signal applied to the respective gate terminal. Furthermore, in order to avoid short-circuits between the supply potential V1 and the ground potential VD, the transistors T1'-T2', T3'-T4', T5'-T6' present on a same branch of the inverter 200 are driven by two mutually complementary PWM signals on a same period T, i.e. a PWM signal and a complementary signal NPWM.

A correct control of the inverter 200, and thus also of the BLDC motor, implies that each commutation step, having an extent of 60 electrical degrees, must be synchronized with the rotor position.

It is worth noting that when a BLDC motor turns, a back electro-motive force or BEMF is generated by effect of magnetic induction on each conductor winding A', B', C'. It is a voltage which, according to Lenz's law, opposes the voltage supplied to the winding itself by means of the inverter 200.

For generating a maximum torque by the BLDC motor M1, the magnetic flux generated by the currents in the stator windings must be offset by 90 electrical degrees with respect to the magnetic flux associated with the rotor. Therefore, in order to obtain the maximum torque, the current of each conductive winding of the stator must be in phase with the back electro-motive force BEMF voltage associated with such a winding. In other words, for a correct control of the movement of the BLDC motor, in particular a sensorless control, the electronic control unit which controls the inverter device 200 (not shown in the figures 2A, 2B) is configured to detect such a back electro-motive force BEMF.

As known, such a back electro-motive force BEMF can be detected when the concerned conductor winding, A', B' or C' is not connected to the supply potential V1 or to the ground potential VD, in particular by reading the voltage present on the winding itself. However, such a known method has some drawbacks, as will be clarified below.

It is assumed that in a first control step, the supply potential V1 is applied to the first winding A', the ground potential VD is applied to the second winding B', while the third winding C is not supplied. This occurs because:
- the first transistor T1' is activated by the PWM signal (ON) and the second transistor T2' is deactivated by the NPWM signal (OFF);
- the third transistor T3' is deactivated by the NPWM signal and the fourth transistor T4' is activated by the PWM signal;
- the fifth T5' and the sixth T6' transistors are both deactivated.

Following the commutation from such a first step to a subsequent control step, with reference to figure 2A, the supply potential V1 is still applied to the first winding A'. This time, the ground potential VD is applied to the third winding C', while the second winding B' is not supplied. This is obtained by:
- keeping the first transistor T1' activated by the PWM signal and the second transistor T2' deactivated by the NPWM signal;
- activating the sixth transistor T6' with the PWM signal and keeping the fifth transistor T5' deactivated by the NPWM signal;
- taking the third T3' and the fourth T4' transistors to deactivated state.

In light of the above, following the commutation, since the current in the second winding B' cannot be canceled instantaneously, a discharge current, or first discharge current Id1, is detected, in addition to the regulated current IR, in the second winding B', which reaches the supply potential V1 through the third recirculation diode D3 associated with the third transistor T3'.

With reference to figure 2B, following the commutation, a similar discharge current, or second discharge current, Id2, can be detected in the second winding B' in the case of dual drive of the transistor pairs T1', T2' and T5', T6' with the PWM and NPWM signals.

It is worth noting that, following a commutation from a control step to a subsequent control step, discharge currents similar to those mentioned above concern each conductor winding of the motor M1 which is not connected to the power supply potential. Such discharge currents prevent accurately detecting the actual back electro-motive force BEMF generated in the winding by Lenz effect and, therefore, hinder an efficient control of the movement of the BLDC motor itself by the electronic control unit. The aforesaid current discharge time is referred to as a back electro-motive force blanking time by those skilled in the art. Such a blanking time is proportional to the current which crosses each winding A', B', C' of the motor and therefore is a limit to the effective control of the BLDC motor when the latter is concerned by high currents.

The solutions currently used to reduce the blanking time includes reducing the current in the motor windings, which implies needing to reduce the generated torque. However, this choice is not a feasible solution in many applications

Document US 2013/278189 A1 relates to a sensorless control and a control system for 120-degree-conduction-type PWM inverter and discloses the features of the preamble of claim 1.

Document US 2015/188465 A1 relates to a method for sensing a back electromotive force of a motor.

Document EP 2045908 A2 relates to a device for regulating an electric motor.

Document "AN2009 APPLICATION NOTE PWM MANAGEMENT FOR 3-PHASE BLDC MOTOR DRIVES USING THE ST7MC" 2009-12-31, describes features ofST7MC microcontroller family dedicated to the driving of 3-phase brushless motors.

### Summary

It is the object of the present invention to devise and provide a method for controlling with six-step commutation scheme a three-phase inverter configured to drive a brushless electric motor which allows to overcome, at least in part, the limits and drawbacks of the known control methods, with particular reference to reducing the undesired effects of blanking time to improve the measurements of the back electro-motive force BEMF generated in the motor windings.

Such an object is defined by the subject matter of the independent claims. Preferred embodiments are defined by the dependent claims.

### Brief description of the drawings

Further features and advantages of the method for controlling with six-step commutation scheme a three-phase inverter configured to drive a brushless electric motor according to the invention will become apparent from the following description of a preferred embodiment given by way of non-limiting example, with reference to the accompanying drawings, in which:
- **figure 1** diagrammatically shows an electronic control apparatus of the movement of a three-phase brushless electric motor, in which such an apparatus is configured to implement the control method according to the present invention;
- **figures 2A and 2B** diagrammatically show currents associated with an inverter device of the known type for supplying the conductor windings of a brushless electric motor following the commutation of a first control step to a subsequent control step;
- **figures 3A, 3B, 3C, 3D, 3E and 3F** show, as a function of time, the patterns of control signals generated by a control unit of the apparatus in figure 1 to control the gate terminals of transistors of a respective inverter;
- **figure 4A** shows, as a function of time, a comparison between the pattern of a discharge current in a winding of the BLDC motor in the case of a method for controlling with six-step commutation scheme according with a first exemplary embodiment of the present invention and according to a known solution;
- **figure 4B** shows, as a function of time, patterns of discharge currents in a winding of the BLDC motor in the case of a method for controlling with six-step commutation scheme according with a second exemplary embodiment of the present invention for various duty-cycle values;
- **figure 5** shows, as a function of time, a portion of a current waveform of the BLDC motor controlled in a standard manner with six-step commutation scheme compared with a portion of current waveform of the BLDC motor controlled with a six-step commutation scheme according to a third exemplary embodiment of the invention.

Similar or equivalent elements in the aforesaid figures are indicated by means of the same reference numerals.

### Detailed description

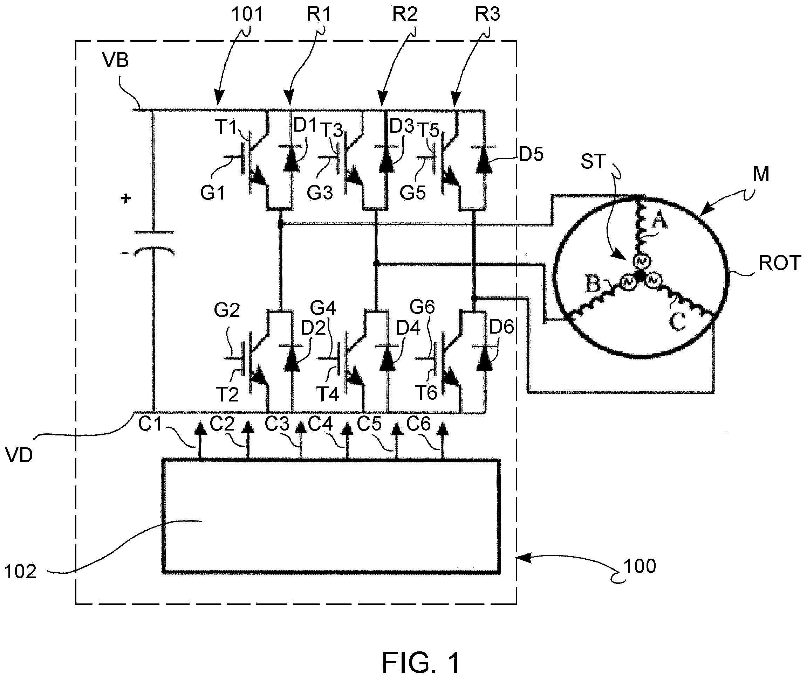

With reference to figure 1, a diagram of an electronic apparatus for controlling the movement of an electric motor M, in which such an apparatus is configured to implement the control method of the present invention, is indicated as a whole by reference numeral 100. Hereafter, such an electronic control apparatus 100 will also be referred to as a control apparatus or simply apparatus.

It is worth noting that the aforesaid electric motor M is a brushless-type three-phase synchronous electric (Brushless Direct Current or BLDC) motor, which can be used, for example, in kitchen suction hoods.

Furthermore, in particular, the movement control of the motor M is sensorless.

In general, such a brushless motor M comprises an external movable rotor ROT and an internal stator ST provided with conductor windings supplied by alternating current.

For example, such a rotor ROT comprises a magnet-holder body having a circumferential wall molded of synthetic material, preferably plastic, mixed with particles of magnetizable material, e.g. ferrite, and magnetized in a HALBACH magnetic array, with circumferentially alternating poles of type known to those skilled in the art. In a preferred embodiment, the circumferential wall of the rotor ROT is magnetized with eight poles forming four pairs of opposite poles.

According to an exemplary embodiment, the internal stator ST is a salient pole stator including three stator windings A, B, C star connected to one another and with star center not connected to ground.

The electronic control apparatus 100, which for example is integrated on an electronic printed circuit board (PCB), comprises an inverter 101, consisting of a three-phase circuit structure including power transistors T1, T2, T3, T4, T5, T6, e.g. IGBT (Insulated Gate Bipolar Transistors), of the type known to those skilled in the art.

The inverter 101 consists of three branches R1, R2, R3 connected in parallel to one another between a first conductive line connected to a direct power supply potential VB and a second conductive line connected to the ground potential VD. Each of such branches R1, R2, R3 of the inverter includes two electronic power transistors.

A respective recirculation diode D1, D2, D3, D4, D5, D6 is associated with each of the power transistors T1, T2, T3, T4, T5, T6 of the inverter 101. The inverter 101 is configured to supply three-phase electricity to the stator ST of the electric motor M to ensure the desired speed (or torque) to the motor M itself, i.e. to move it. Such an inverter 101 controls the voltage and the current supplied to the motor M with a six-step commutation scheme which is repeated cyclically. In particular, during each commutation step, the conductor windings or phases A, B, C of the stator ST can be connected alternatively either to the supply potential VB or to a ground potential VD by activating/deactivating the transistors T1, T2, T3, T4, T5, T6.

The electronic control apparatus 100 further comprises an electronic control unit 102 configured to selectively activate/deactivate the power transistors T1, T2, T3, T4, T5, T6 of the inverter 101. In particular, such an electronic control unit 102, preferably consisting of a microcontroller, includes electric control terminals C1, C2, C3, C4, C5, C6 each of which is connected to a gate terminal Gi (with i=1...6) of one of the power transistors T1, T2, T3, T4, T5, T6. By means of each electric control terminal C1, C2, C3, C4, C5, C6, the electronic control unit 102 is configured to provide control signals for activating/deactivating each transistor of the inverter 101.

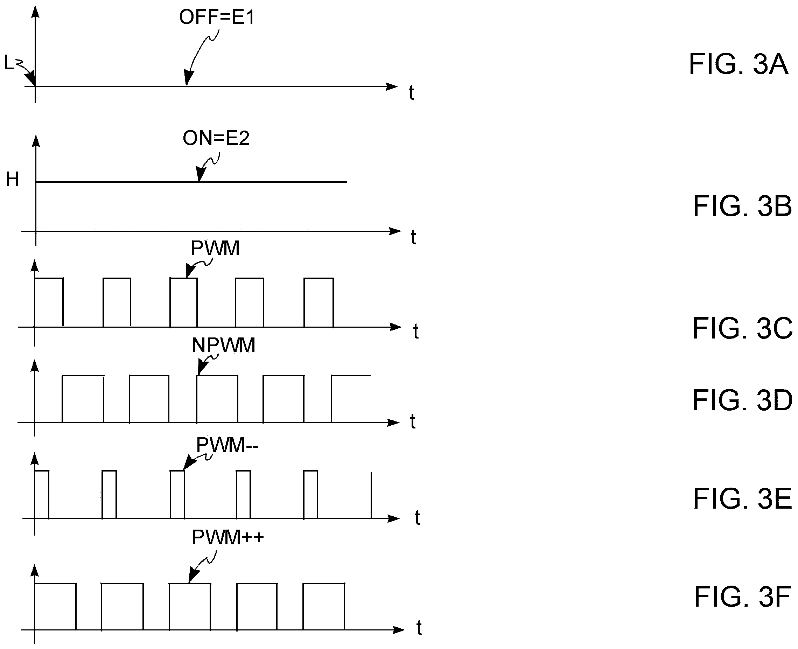

In particular, with reference to figures 3A, 3B, 3C, 3D, 3E, 3F such control signals comprise:
- a first signal, constant over time, E1=OFF having respective zero amplitude L,
- a second signal, constant over time, E2=ON having predetermined respective positive amplitude H, where such an amplitude H is adapted to activate the power transistors of the inverter 101;
- a first PWM and a second NPWM pulse width modulation signal, mutually complementary with respect to the same period T and having different duty-cycle;

- a third pulse width modulation signal PWM-- having duty-cycle smaller than the duty-cycle of the first pulse width modulation PWM signal;
- a fourth pulse width modulation signal PWM++ having duty-cycle greater than the duty-cycle of the first pulse width modulation PWM signal.

In a first embodiment, the first pulse width modulation signal PWM has a 40% duty-cycle and the second pulse width modulation signal NPWM has a 60% duty-cycle. Furthermore, the third pulse width modulation signal PWM-
- has a 20% duty-cycle and the fourth pulse width modulation signal PWM++ has a 60% duty-cycle.

The operative steps of the method of the invention are described in greater detail below, implemented by the electronic control unit 102 of the apparatus 100, to control with a six-step commutation scheme the three-phase inverter 101 which drives the brushless electric motor M.

It is worth noting that the electronic control unit 102, i.e. the microcontroller, is provided to load the codes of an application program which implements the method of the present invention in a respective memory and to run it.

The method of the invention will be described with reference to the aforesaid figures and to TABLE 1 and TABLE 2, below which show two different exemplary embodiments.

It is worth noting that the method is described in detail making reference to the power transistors of the inverter 101 involved in the first commutation step Step1. However, the same procedure may be repeated for each of the subsequent commutation steps Step2-Step6, varying the concerned power transistors as a consequence.

Furthermore, as known, in each commutation step Step1-Step6, only two of the three branches R1, R2, R3 of the inverter 101 are involved in current conduction, while the third (with the respective power transistors) remains disabled.

In particular, the method includes a step of applying, by the electronic control unit 102, for at least part of the first commutation step Step1, the first pulse width modulation PWM signal to the gate terminals G1, G4 of first transistors T1, T4 of the first R1 and of the second R2 branch of the three branches which form the three-phase inverter 101. Thereby, the conduction of electric current through such first transistors T1, T4 is enabled.

Furthermore, a step of applying, for at least part of the first commutation step Step1, the second pulse width modulation signal NPWM to gate terminals G2, G3 of second transistors T1, T3 of the same first R1 and a second R2 branch of the three branches which form the three-phase inverter 101 is provided to disable the electric current conduction through such second transistors T2, T3.

The method additionally comprises the step of subdividing or distributing, by the electronic control unit 102, each commutation step Step1-Step6 of the six commutation steps into a first commutation step portion Step1.1-Step6.1 and a subsequent second commutation step portion Step1.2-Step6.2.

Additionally, with reference to the first commutation step Step1 (but the same considerations can be repeated for each subsequent commutation step Step2-Step6), during the first commutation step portion Step1.1, the method comprises the further steps of:
- applying, by the electronic control unit 102, a first signal to the gate terminals G1, G2 of the first transistors T1, T4 when the first pulse width modulation signal PWM is applied to such first transistors in the subsequent second commutation step portion Step1.2,
- applying, again by the electronic control unit 102, a second signal to the gate terminals G2, G3 of the second transistors T2, T3 when the second pulse width modulation signal NPWM is applied to such second transistors in the subsequent second commutation step portion Step1.2.

**TABLE 1**

| Commutation step | | T1 | T2 | T3 | T4 | T5 | T6 |
|---|---|---|---|---|---|---|---|
| Step 1 | Step 1.1 | OFF | ON | ON | OFF | OFF | OFF |
| | Step 1.2 | PWM | NPWM | NPWM | PWM | OFF | OFF |
| Step 2 | Step 2.1 | OFF | ON | OFF | OFF | ON | OFF |
| | Step 2.2 | PWM | NPWM | OFF | OFF | NPWM | PWM |
| Step 3 | Step 3.1 | OFF | OFF | OFF | ON | ON | OFF |
| | Step 3.2 | OFF | OFF | PWM | NPWM | NPWM | PWM |
| Step 4 | Step 4.1 | ON | OFF | OFF | ON | OFF | OFF |
| | Step 4.2 | NPWM | PWM | PWM | NPWM | OFF | OFF |
| Step 5 | Step 5.1 | ON | OFF | OFF | OFF | OFF | ON |
| | Step 5.2 | NPWM | PWM | OFF | OFF | PWM | NPWM |
| Step 6 | Step 6.1 | OFF | OFF | ON | OFF | OFF | ON |
| | Step 6.2 | OFF | OFF | NPWM | PWM | PWM | NPWM |

**TABLE 2**

| Commutation step | | T1 | T2 | T3 | T4 | T5 | T6 |
|---|---|---|---|---|---|---|---|
| Step 1 | Step 1.1 | PWM-- | PWM++ | ON | OFF | OFF | OFF |
| | Step 1.2 | PWM | NPWM | NPWM | PWM | OFF | OFF |
| Step 2 | Step 2.1 | PWM-- | PWM++ | OFF | OFF | ON | OFF |
| | Step 2.2 | PWM | NPWM | OFF | OFF | NPWM | PWM |
| Step 3 | Step 3.1 | OFF | OFF | PWM-- | PWM++ | ON | OFF |
| | Step 3.2 | OFF | OFF | PWM | NPWM | NPWM | PWM |
| Step 4 | Step 4.1 | ON | OFF | PWM-- | PWM++ | OFF | OFF |
| | Step 4.2 | NPWM | PWM | PWM | NPWM | OFF | OFF |
| Step 5 | Step 5.1 | ON | OFF | OFF | OFF | PWM-- | PWM++ |
| | Step 5.2 | NPWM | PWM | OFF | OFF | PWM | NPWM |
| Step 6 | Step 6.1 | OFF | OFF | ON | OFF | PWM-- | PWM++ |
| | Step 6.2 | OFF | OFF | NPWM | PWM | PWM | NPWM |

With reference to both embodiments in Tables 1 and 2, the aforesaid first signal is advantageously configured to at least reduce the current conducted by the first transistors T1, T4 of the first R1 and of the second R2 branch of the three-phase inverter 101, and the aforesaid second signal is configured to increase the current conducted by the second transistors T2, T3 in the same first R1 and second R2 branch of the three-phase inverter 101.

In greater detail, with reference to the exemplary embodiment of the method in TABLE 1, such a first signal applied to the gate terminals of the first transistors T1, T4 of the first R1 and the second R2 branch of the inverter 101 is the first signal which is constant over time E1 having amplitude L equal to zero and indicated by OFF in TABLE 1. Such a first constant signal E1 is configured to disable the first transistors T1, T4.

Furthermore, the second signal applied to the gate terminals of the second transistors T2, T3 of the first R1 and of the second R2 branch of the inverter 101 is the second signal which is constant over time E2 having predetermined positive amplitude H (indicated by ON in TABLE 1) and configured to enable such second transistors.

With reference to the exemplary embodiment of the method in TABLE 2, the aforesaid first signal coincides with the first signal which is constant over time E1 of zero amplitude (indicated by OFF in the table) when it is applied to the gate terminal of one of the first transistors T1, T4 of the first R1 and of the second R2 branch of the three branches of the three-phase inverter 101 to disable such a first transistor. In particular, for the first step Step1, it is transistor T4.

The aforesaid first signal coincides with the third pulse width modulation signal PWM-- when it is applied to the gate terminal of the other of the aforesaid first transistors T1, T4, i.e. when it is applied to the transistor T1.

Again, with reference to the exemplary embodiment in TABLE 2, the aforesaid second signal coincides with the second signal which is constant over time E2 of predetermined positive amplitude H (indicated by ON in the table) when it is applied to the gate terminal of one of the second transistors T2, T3 of the first R1 and of the second R2 branch of the three branches of the three-phase inverter 101 to disable such a second transistor. With regards to the example of the step Step1, it is transistor T3.

The aforesaid second signal coincides with the fourth pulse width modulation signal PWM++ when it is applied to the gate terminal of the other of the such second transistors T2, T3, i.e. of the transistor T2.

The Applicant has verified by means of simulations that the use of the six-step control schemes of the inverter 101 shown in TABLE 1 and TABLE 2 allow to reduce the blanking time and improve the detection of the back electro-motive force BEMF generated in the windings A, B, C of the stator ST by the electronic control unit 102. So, with the method according to the present invention the control of the movement of the motor M by the electronic control unit 102 is improved.

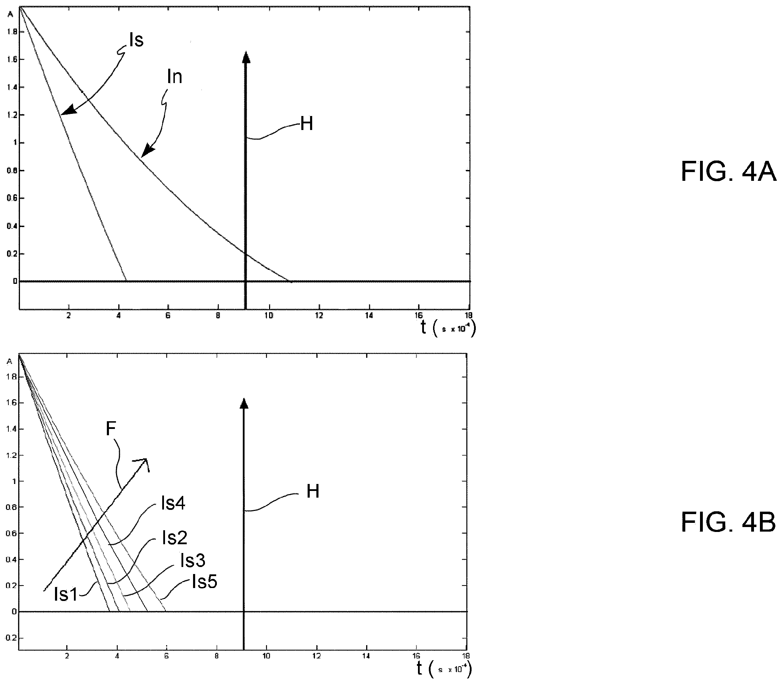

Figure 4A shows, as a function of time, a comparison between the pattern of a discharge current I_{S} in a winding of the BLDC motor M obtained by applying the control method with six-step commutation scheme of the inverter 101 according to the exemplary embodiment in TABLE 1 with respect to the discharge current I_{N} obtained with a known control method.

In particular, the discharge currents Is, I_{N} of the simulation in figure 4A related to a motor which turns at a speed of 1800rpm with a phase current of 2A. Furthermore, such a result is obtained by assuming an extent s equal to 25 electrical degrees.

In such a figure, it is worth noting that the current discharge I_{S} obtained with the method of the invention is faster than the current discharge of the known solution I_{N}. It is worth noting that, in each instant, the value of the current Is is lower than that of the current I_{N}. Furthermore, the slower discharge of the current in the known solution I_{N} extends over time to overlap and mask the zero-crossing event, represented by the arrow H, which defines the limit beyond which the motor M can no longer be controlled effectively. The simulation in figure 4A thus confirms that the control scheme of TABLE 1 reduces the blanking time with respect to the known control scheme.

Figure 4B shows patterns of a plurality of discharge currents I_{S1}, I_{S2}, I_{S3}, I_{S4}, I_{S5} in a winding of the BLDC motor M, in the case of a control with six-step commutation scheme of the inverter 101 according with the exemplary embodiment in TABLE 2 for various duty-cycle values. In this case, the various patterns of the discharge currents are obtained considering increasing duty-cycle values (in the sense indicated by the arrow F) of the third pulse width modulation signal PWM-- in the simulation. In particular, the duty-cycles 0%, 20%, 40%, 60% and 80% are simulated. Also in this case, the discharge currents simulated by the figure 4B relate to a motor which turns at a speed of 1800rpm with a phase current of 2A and the result is obtained by assuming an extent s equal to 25 electrical degrees.

As in the previous case, in such a figure, it can be noted that the discharge of the currents I_{S1}, I_{S2}, I_{S3}, I_{S4}, I_{S5} obtained with the method of the invention is faster and can be modulated as the duty-cycle varies, despite keeping lower than the limit of the zero-crossing event, represented by the arrow H, without ever masking it.

It is worth noting that each step Step1-Step6 of the six commutation steps of the method has, as known, an extent of 60 electrical degrees. Furthermore, the first commutation step portion Step1.1-Step6.1 of each commutation step has a first extent D1 and the subsequent second commutation step portion Step1.2-Step6.2 has a second extent D2 greater than the first extent D1.

By means of simulations, the Applicant has verified a reduction of the effects of the blanking time when the first step portion Step1.1-Step6.1 of each commutation step Stepl-Step6 has a first extent D1 comprised between 5 and 30 electrical degrees. In particular, the reduction of the blanking time is optimal when the first extent D1 is equal to 10 electrical degrees.

It is worth noting that, during the six commutation steps, each transistor T1-T6 of the inverter 101 is driven by a PWM type signal for at least 33% of the entire cycle having extent of 360 electrical degrees in the case of the control scheme in TABLE 1 and for 50% of the entire cycle having extent of 360 electrical degrees in the case of the control scheme in TABLE 2. During this period, each transistor is subject to switching losses, which reduce the lifespan of such a device and further require the use of large and costly dissipators.

The Applicant has verified that such switching losses can be reduced by modifying the method of the present invention so as to implement the six-step control scheme of the inverter 101 according to TABLE 3 shown below.

**TABLE 3**

| Commutation step | | T1 | T2 | T3 | T4 | T5 | T6 |
|---|---|---|---|---|---|---|---|
| Step 1 | Step 1.1 | OFF | ON | ON | OFF | OFF | OFF |
| | Step 1.2 | ON | OFF | OFF | PWM | OFF | OFF |
| Step 2 | Step 2.1 | OFF | ON | OFF | OFF | ON | OFF |
| | Step 2.2 | PWM | OFF | OFF | OFF | OFF | ON |
| Step 3 | Step 3.1 | OFF | OFF | OFF | ON | ON | OFF |
| | Step 3.2 | OFF | OFF | ON | OFF | OFF | PWM |
| Step 4 | Step 4.1 | ON | OFF | OFF | ON | OFF | OFF |
| | Step 4.2 | OFF | ON | PWM | OFF | OFF | OFF |
| Step 5 | Step 5.1 | ON | OFF | OFF | OFF | OFF | ON |
| | Step 5.2 | OFF | PWM | OFF | OFF | ON | OFF |
| Step 6 | Step 6.1 | OFF | OFF | ON | OFF | OFF | ON |
| | Step 6.2 | OFF | OFF | OFF | ON | PWM | OFF |

With reference to the figures and to TABLE 3, such a modified control method with six-step commutation scheme of the three-phase inverter 101 configured to drive the brushless electric motor M comprises the following steps.

A step of generating, by an electronic control unit 102, control signals which comprise:
the pulse width modulation signal PWM,
the first signal, constant over time, E1 having amplitude L equal to zero,
the second signal, constant over time, E2 having predetermined positive amplitude H.

Furthermore, for at least part of each commutation step Step1-Step6 and with reference by way of example to the first step Step1, applying, by the electronic control unit 102:
the second signal, constant over time, E2 (ON) to the gate terminal G1 of a first transistor T1 of the first branch R1 of the three branches which form the three-phase inverter 101 to enable the conduction of electric current through such a first transistor, and
the pulse width modulation signal PWM to the gate terminal G4 of a further first transistor T4 of a second branch R2 of the three branches which form the three-phase inverter to enable the conduction of electric current through said further first transistor, and furthermore
the first signal, constant over time, E1 (OFF) to the gate terminals of a second T2 and a further second T3 transistor of the first R1 and the second R2 branch of the three-phase inverter 101, respectively, to disable electric current conduction through such second and further second transistor.

The method further comprises the step of subdividing, or distributing, by the electronic control unit 102, each commutation step Step1-Step6 of the six commutation steps into a first commutation step portion Step1.1-Step6.1 and a subsequent second commutation step portion Step1.2-Step6.2.

With reference for the sake of simplicity to the first commutation step Step1, but the solution similarly applies to the subsequent steps Step2-Step6, during the first commutation step portion Step1.1, the method comprises the steps of:
- applying, by the electronic control unit 102, the first signal, which is constant over time, E1 (OFF) both to the gate terminal G4 of such a further first transistor T4 when the pulse width modulation signal PWM is applied to said further first transistor in the subsequent second commutation step portion Step1.2, and to the gate terminal of such a first transistor T1 when the second signal, which is constant over time, E2 (ON) is applied to said first transistor in the subsequent second commutation step portion Step1.2;
- applying, by the electronic control unit 102, the second signal, which is constant over time, E2 (ON) to the gate terminals G2, G3 of said second T2 and further second T3 transistor to which the first signal, which is constant over time, E1 is applied in the subsequent second commutation step portion Step1.2.

In particular, the first signal E1 is configured to cancel the current conducted by the aforesaid first and further first transistor T1, T4 of the first and second branch of the three-phase inverter 101.

The second signal E2 is configured to increase the current conducted by the second and by the further second transistor T2, T3 of the first R1 and second branch R2 of the three-phase inverter 101.

With the modified control method illustrated with reference to TABLE 3, during the six commutation steps each transistor T1-T6 of the inverter 101 is driven by a PWM type signal for at least 16% of the entire commutation cycle having extent of 360 electrical degrees.

So, such a modified control method has the advantage of reducing switching losses of the power transistors by about 50% with respect to the method described with reference to TABLE 1, thus the working life of the transistors is increased and the apparatus required less performing dissipators.

However, the modified control method offers fewer advantages in terms of blanking time reduction with respect to the method described with reference to TABLE 1.

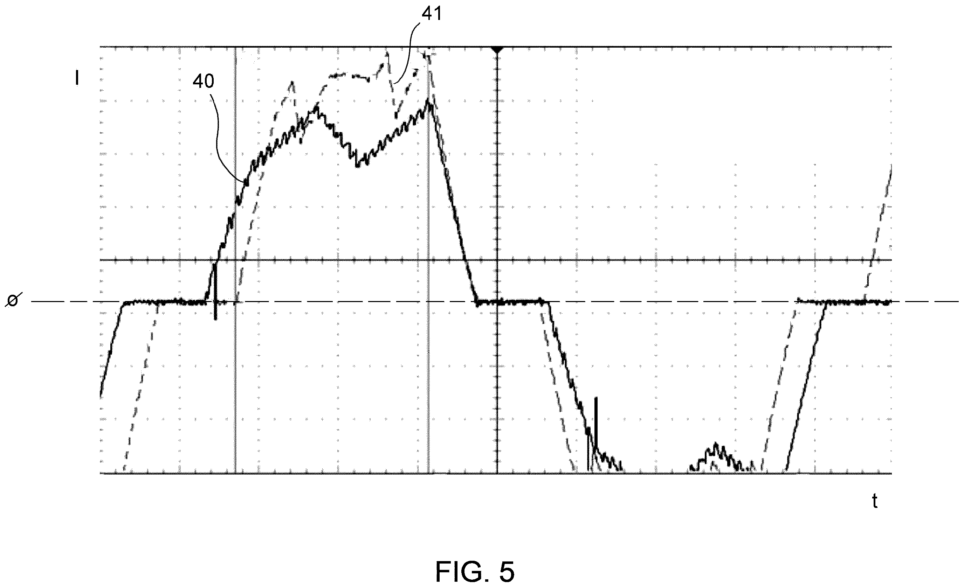

With reference to figure 5, a part of a current waveform of the BLDC motor M controlled in a standard manner with six-step commutation scheme is compared with a portion of current waveform of the BLDC motor controlled with a six-step commutation scheme according to TABLE 3 of the invention. It is worth noting that similar patterns as a function of time can be obtained also by controlling the motor M with six-step commutation scheme as described in the TABLES 1 or 2 shown above.
In particular, the waveform (solid line) of the current related to a standard control is indicated by reference numeral 40. Reference numeral 41 indicates the waveform (dashed line) of the current related to a control performed with the six-step commutation scheme according to TABLE 3.
The motor and the load are the same in both cases. The speed is adjusted to obtain the same phase current discharge time, i.e. ts = 670µs, which is a limit condition.
With the six-step control scheme in TABLE 3, the waveform of the current 41 controlled according to the invention has a much higher average value that the current 40 obtained with the standard control. In other words, the control method of the invention ensures that the motor M turns at a speed of about 2000rpm, i.e. at a greater speed than that which can be obtained with the traditional control scheme which is about 1750rpm.

Those skilled in art may make changes and adaptations to the control method with six-step commutation scheme of a three-phase inverter described above or can replace elements with others which are functionally equivalent to meet contingent needs without departing from the scope of the appended claims.

## Claims

1. Method for controlling with six-step commutation scheme a three-phase inverter (101) configured to drive a brushless electric motor (M), comprising the steps of:
- generating, by an electronic control unit (102) of the three-phase inverter, control signals comprising a first (PWM) and a second (NPWM) pulse width modulation signal, said second pulse width modulation signal (NPWM) being the complementary over a period T of the first pulse width modulation signal (PWM);
- applying, for at least part of each commutation step (Step1), by the electronic control unit (102), said first pulse width modulation signal (PWM) to gate terminals of first transistors (T1,T4), the first transistors being the upper transistor (T1) of a first branch (R1) and the lower transistor (T4) of a second branch (R2) respectively or the lower transistor (T2) of the first branch (R1) and the upper transistor (T3) of the second branch (R2) respectively, of the three branches that make up the three-phase inverter (101) to enable electric current conduction through said first transistors (T1,T4);
- applying, for at least part of each commutation step (Step1), by the electronic control unit (102), said second pulse width modulation signal (NPWM) to gate terminals of second transistors (T2, T3) of the first (R1) and second (R2) branch of the three branches that make up the three-phase inverter (101), said second transistors being different from the first transistors, to disable electric current conduction through said second transistors (T2, T3);
**characterised by**
- subdividing, by the electronic control unit (102), each commutation step (Step1) of the six commutation steps into a first commutation step portion (Step1.1) and into a subsequent second commutation step portion (Step1.2), wherein each commutation step (Step1) of said six commutation steps has an extent of 60 electrical degrees and wherein the first commutation step portion (Step1.1) of each commutation step has a first extent (D1) and the subsequent second commutation step portion (Step1.2) has a second extent (D2) greater than the first extent (D1), wherein, for each commutation step, during the first commutation step portion (Step1.1), the method comprises:
- applying, by the electronic control unit (102), a first signal (E1; PWM--, E1) to the gate terminals of said first transistors (T1, T4) when the first pulse width modulation signal (PWM) is applied to said first transistors in the subsequent second commutation step portion (Step1.2),
- applying, by the electronic control unit (102), a second signal (E2; PWM++, E2) to the gate terminals of said second transistors (T2, T3) when the second pulse width modulation signal (NPWM) is applied to said second transistors in the subsequent second commutation step portion (Step1.2),
wherein said first signal (E1; PWM--, E1) is configured to at least reduce the current conducted by the first transistors (T1, T4) of the first and second branch of the three-phase inverter, and said second signal (E2; PWM++, E2) is configured to increase the current conducted by the second transistors (T2, T3) of the first and second branch of the three-phase inverter.

2. Method for controlling a three-phase inverter (101) according to claim 1, wherein said first signal (E1) applied to the gate terminals of the first transistors (T1, T4) of the first (R1) and the second (R2) branch of the three branches that make up the three-phase inverter (101) is a first signal that is constant over time configured to deactivate the first transistors, said second signal (E2) applied to the gate terminals of the second transistors (T2, T3) of the first and second branch of the three-phase inverter is a second signal that is constant over time configured to activate the second transistors.

3. Method for controlling a three-phase inverter (101) according to claim 2, wherein said first signal (E1) has amplitude equal to zero, said second signal (E2) has predetermined positive amplitude.

4. Method for controlling a three-phase inverter (101) according to claim 1, wherein said first signal coincides with:
- a first signal, constant over time, (E1) having amplitude equal to zero when it is applied to the gate terminal of one of the first transistors (T1, T4) of a first and a second branch of the three branches of the three-phase inverter (101) to deactivate said first transistor, and
- a third pulse width modulation signal (PWM--) when it is applied to the gate terminal of the other of said first transistors (T1, T4);
said second signal coincides with:
- a second signal, constant over time, (E2) having predetermined positive amplitude when it is applied to the gate terminal of one of the second transistors (T2, T3) of a first and a second branch of the three branches of the three-phase inverter (101) to activate said second transistor, and
- a fourth pulse width modulation (PWM++) signal when it is applied to the gate terminal of the other of said second transistors (T2, T3).

5. Method for controlling a three-phase inverter (101) according to claim 4, wherein said third pulse width modulation signal (PWM--) has a duty-cycle less than the duty-cycle associated with the first pulse width modulation signal (PWM).

6. Method for controlling a three-phase inverter (101) according to claim 4, wherein said fourth pulse width modulation signal (PWM++) has a duty-cycle greater than the duty-cycle of the first pulse width modulation signal (PWM).

7. Method for controlling with six-step commutation scheme a three-phase inverter (101) configured to drive a brushless electric motor (M), comprising:
- generating, by an electronic control unit (102) of the three-phase inverter, control signals comprising:
a pulse width modulation signal (PWM),
a first signal, constant over time, (E1) having amplitude equal to zero,
a second signal, constant over time, (E2) having predetermined positive amplitude;
- applying, for at least part of each commutation step (Step1), by the electronic control unit (102):
the second signal, constant over time, (E2) to the gate terminal of a first transistor (T1) of a first branch (R1) of the three branches that make up the three-phase inverter to enable electric current conduction through said first transistor,
the pulse width modulation signal (PWM) to the gate terminal of a further first transistor (T4) of a second branch (R2) of the three branches that make up the three-phase inverter to enable electric current conduction through said further first transistor,
the first signal (E1), constant over time, to the gate terminals of a second (T2) and a further second (T3) transistor of the first (R1) and the second (R2) branch of the three-phase inverter, respectively, to disable electric current conduction through said second and further second transistor
the first transistor and the further first transistor being the upper transistor (T1) of a first branch (R1) and the lower transistor (T4) of a second branch (R2) respectively or the lower transistor (T2) of the first branch (R1) and the upper transistor (T3) of the second branch (R2) respectively;
the second transistor and the further second transistor being the other transistors of the first branch (R1) and the second branch (R2);
**characterised by**
- subdividing, by the electronic control unit (102), each commutation step (Step1) of the six commutation steps into a first commutation step portion (Step1.1) and into a subsequent second commutation step portion (Step1.2),
wherein each commutation step (Step1) of said six commutation steps has an extent of 60 electrical degrees and wherein the first commutation step portion (Step1.1) of each commutation step has a first extent (D1) and the subsequent second commutation step portion (Step1.2) has a second extent (D2) greater than the first extent (D1),
wherein, for each commutation step, during the first commutation step portion (Step1.1), the method comprises:
- applying, by the electronic control unit (102), the first signal (E1), constant over time, both to the gate terminal of the further first transistor (T4) when the pulse width modulation signal (PWM) is applied to said further first transistor in the subsequent second commutation step portion (Step1.2), and to the gate terminal of the first transistor (T1) when the second signal, constant over time, (E2) is applied to said first transistor in the subsequent second commutation step portion (Step1.2);
- applying, by the electronic control unit (102), the second signal, constant over time, (E2) to the gate terminals of said second (T2) and further second (T3) transistor when the first signal (E1), constant over time, is applied to said second transistors in the subsequent second commutation step portion (Step1.2), wherein the first signal (E1), constant over time, is configured to cancel the current conducted by said first and further first transistor (T1, T4) of the first and second branch of the three-phase inverter, and the second signal (E2), constant over time, is configured to increase the current conducted by the second and by the further second transistor (T2, T3) of the first and second branch of the three-phase inverter.

8. Method for controlling a three-phase inverter (101) according to claims 1 or 7, wherein the first commutation step portion (Step1.1) of each commutation step (Step1) has a first extent (D1) comprised between 5 and 30 electrical degrees, preferably said first extent (D1) is equal to 10 electrical degrees.

9. Electronic apparatus (100) for controlling the movement of a brushless electric motor (M), comprising:
- a three-phase inverter (101) configured to drive the brushless electric motor (M);
- an electronic control unit (102) configured to control in six-step commutation said three-phase inverter (101) by carrying out the steps of the method according to any one of the claims 1-8.

## Patentansprüche

1. Verfahren zum Steuern eines Dreiphasen-Inverters (101) mit einem sechs-Schritt-Kommutationsschema, welcher dazu eingerichtet ist, einen bürstenlosen Elektromotor (M) anzutreiben, umfassend die Schritte:
- Erzeugen von Steuersignalen, welche ein erstes (PWM) und ein zweiten (NPWM) Pulsweiten-Modulationssignal umfassen, durch eine elektronische Steuereinheit (102) des Dreiphasen-Inverters, wobei das zweite Pulsweiten-Modulationssignal (NPWM) das Komplementäre über eine Periode T des ersten Pulsweiten-Modulationssignals (PWM) ist;
- Anwenden für wenigstens einen Teil von jedem Kommutationsschritt (Step1) des ersten Pulsweiten-Modulationssignals (PWM) auf Gate-Terminals von ersten Transistoren (T1, T4) durch die elektronische Steuereinheit (102), wobei die ersten Transistoren jeweils der obere Transistor (T1) eines ersten Zweigs (R1) und der untere Transistor (T4) eines zweiten Zweigs (R2) oder jeweils der untere Transistor (T2) des ersten Zweigs (R1) und der obere Transistor (T3) des zweiten Zweigs (R2) der drei Zweige sind, welche den Dreiphasen-Inverter (101) bilden, um ein Leiten von elektrischem Strom durch die ersten Transistoren (T1, T4) zu ermöglichen;
- Anwenden für wenigstens einen Teil von jedem Kommutationsschritt (Step1) des zweiten Pulsweiten-Modulationssignales (NPWM) durch die elektronische Steuereinheit (102) auf Gate-Terminals von zweiten Transistoren (T2, T3) des ersten (R1) und zweiten (R2) Zweigs der drei Zweige, welche den Dreiphasen-Inverter (101) bilden, wobei die zweiten Transistoren verschieden von den ersten Transistoren sind, um ein Leiten von elektrischem Strom durch die zweiten Transistoren (T2, T3) zu verhindern;
**gekennzeichnet durch**:
- Unterteilen von jedem Kommutationsschritt (Step1) der sechs Kommutationsschritte in einen ersten Kommutationsschritt-Abschnitt (Step1.1) und in einen nachfolgenden zweiten Kommutationsschritt-Abschnitt (Step1.2) durch die elektronische Steuereinheit (102),
wobei jeder Kommutationsschritt (Step1) der sechs Kommutationsschritte eine Ausdehnung von 60 elektrischen Grad aufweist und wobei der erste Kommutationsschritt-Abschnitt (Step1.1) von jedem Kommutationsschritt eine erste Ausdehnung (D1) aufweist und der nachfolgende zweite Kommutationsschritt-Abschnitt (Step1.2) eine zweite Ausdehnung (D2) aufweist, welche größer als die erste Ausdehnung (D1) ist,
wobei für jeden Kommutationsschritt während des ersten Kommutationsschritt-Abschnitts (Step1.1) das Verfahren umfasst:
- Anwenden eines ersten Signals (E1; PWM--, E1) auf die Gate-Terminals der ersten Transistoren (T1, T4) durch die elektronische Steuereinheit (102), wenn das erste Pulsweiten-Modulationssignal (PWM) auf die ersten Transistoren in dem nachfolgenden zweiten Kommutationsschritt-Abschnitt (Step1.2) angewendet wird,
- Anwenden eines zweiten Signals (E2; PWM++, E2) auf die Gate-Terminals der zweiten Transistoren (T2, T3) durch die elektronische Steuereinheit (102), wenn das zweite Pulsweiten-Modulationssignal (NPWM) auf die zweiten Transistoren in dem nachfolgenden zweiten Kommutationsschritt-Abschnitt (Step1.2) angewendet wird,
wobei das erste Signal (E1; PWM--, E1) dazu eingerichtet ist, wenigstens den Strom zu reduzieren, welcher von den ersten Transistoren (T1, T4) des ersten und zweiten Zweigs des Dreiphasen-Inverters geleitet wird, und das zweiten Signal (E2; PWM++, E2) dazu eingerichtet ist, den Strom zu erhöhen, welcher von den zweiten Transistoren (T2, T3) des ersten und zweiten Zweigs des Dreiphasen-Inverters geleitet wird.

2. Verfahren zum Steuern eines Dreiphasen-Inverters (101) nach Anspruch 1, wobei das erste Signal (E1), welches auf die Gate-Terminals der ersten Transistoren (T1, T4) des ersten (R1) und zweiten (R2) Zweigs der drei Zweige angewendet wird, welche den Dreiphasen-Inverter (101) bilden, ein erstes Signal ist, welches über der Zeit konstant ist, welches dazu eingerichtet ist, die ersten Transistoren zu deaktivieren, wobei das zweite Signal (E2), welches auf die Gate-Terminals der zweiten Transistoren (T2, T3) des ersten und zweiten Zweigs des Dreiphasen-Inverters angewendet wird, ein zweites Signal ist, welches über der Zeit konstant ist, welches dazu eingerichtet ist, die zweiten Transistoren zu aktivieren.

3. Verfahren zum Steuern eines Dreiphasen-Inverters (101) nach Anspruch 2, wobei das erste Signal (E1) eine Amplitude gleich null aufweist, wobei das zweite Signal (E2) eine vorbestimmte positive Amplitude aufweist.

4. Verfahren zum Steuern eines Dreiphasen-Inverters (101) nach Anspruch 1, wobei das erste Signal zusammenfällt mit:
- einem ersten Signal, konstant über der Zeit, (E1), welches eine Amplitude gleich null aufweist, wenn es auf das Gate-Terminal von einem der ersten Transistoren (T1, T4) eines ersten und eines zweiten Zweigs der drei Zweige des Dreiphasen-Inverters (101) angewendet wird, um den ersten Transistor zu deaktivieren, und
- einem dritten Pulsweiten-Modulationssignal (PWM--), wenn es auf das Gate-Terminal des anderen der ersten Transistoren (T1, T4) angewendet wird; wobei das zweite Signal zusammenfällt mit:
- einem zweiten Signal, konstant über der Zeit, (E2), welches eine vorbestimmte positive Amplitude aufweist, wenn es auf das Gate-Terminal von einem der zweiten Transistoren (T2, T3) eines ersten und eines zweiten Zweigs der drei Zweige des Dreiphasen-Inverters (101) angewendet wird, um den zweiten Transistor zu aktivieren, und
- einem vierten Pulsweiten-Modulationssignal (PWM++), wenn es auf das Gate-Terminal des anderen der zweiten Transistoren (T2, T3) angewendet wird.

5. Verfahren zum Steuern eines Dreiphasen-Inverters (101) nach Anspruch 4, wobei das dritte Pulsweiten-Modulationssignal (PWM--) einen Arbeitszyklus aufweist, welcher geringer als der Arbeitszyklus ist, welcher dem ersten Pulsweiten-Modulationssignal (PWM) zugeordnet ist.

6. Verfahren zum Steuern eines Dreiphasen-Inverters (101) nach Anspruch 4, wobei das vierte Pulsweiten-Modulationssignal (PWM++) einen Arbeitszyklus aufweist, welcher größer als der Arbeitszyklus des ersten Pulsweiten-Modulationssignals (PWM) ist.

7. Verfahren zum Steuern eines Dreiphasen-Inverters (101) mit einem sechs-Schritt-Kommutationsschema, welcher dazu eingerichtet ist, einen bürstenlosen Elektromotor (M) anzutreiben, umfassend:
- Erzeugen von Steuersignalen durch eine elektronische Steuereinheit (102) des Dreiphasen-Inverters, welche umfassen:
ein Pulsweiten-Modulationssignal (PWM),
ein erstes Signal, konstant über der Zeit, (E1), welches eine Amplitude gleich null aufweist,
ein zweites Signal, konstant über der Zeit, (E2), welches eine vorbestimmte positive Amplitude aufweist;
- Anwenden für wenigstens einen Teil von jedem Kommutationsschritt (Step1) durch die elektronische Steuereinheit (102):
des zweiten Signals, konstant über der Zeit, (E2) auf das Gate-Terminal eines ersten Transistors (T1) eines ersten Zweigs (R1) der drei Zweige, welche den Dreiphasen-Inverter bilden, um ein Leiten von elektrischem Strom durch den ersten Transistor zu ermöglichen,
des Pulsweiten-Modulationssignals (PWM) auf das Gate-Terminal eines weiteren ersten Transistors (T4) eines zweiten Zweigs (R2) der drei Zweige, welche den Dreiphasen-Inverter bilden, um ein Leiten von elektrischem Strom durch den weiteren ersten Transistor zu ermöglichen,
des ersten Signals (E1), konstant über der Zeit, jeweils auf die Gate-Terminals eines zweiten (T2) und eines weiteren zweiten (T3) Transistors des ersten (R1) und des zweiten (R2) Zweigs des Dreiphasen-Inverters, um ein Leiten von elektrischem Strom durch den zweiten und den weiteren zweiten Transistor zu verhindern,
wobei der erste Transistor und der weitere erste Transistor jeweils der obere Transistor (T1) eines ersten Zweigs (R1) und der untere Transistor (T4) eines zweiten Zweigs (R2) oder jeweils der untere Transistor (T2) des ersten Zweigs (R1) und der obere Transistor (T3) des zweiten Zweigs (R2) sind;
wobei der zweite Transistor und der weitere zweite Transistor die anderen Transistoren des ersten Zweigs (R1) und des zweiten Zweigs (R2) sind;
**gekennzeichnet durch**:
- Unterteilen von jedem Kommutationsschritt (Step1) der sechs Kommutationsschritte in einen ersten Kommutationsschritt-Abschnitt (Step1.1) und in einen nachfolgenden zweiten Kommutationsschritt-Abschnitt (Step1.2) durch die elektronische Steuereinheit (102),
wobei jeder Kommutationsschritt (Step1) der sechs Kommutationsschritte eine Ausdehnung von 60 elektrischen Grad aufweist und wobei der erste Kommutationsschritt-Abschnitt (Step1.1) von jedem Kommutationsschritt eine erste Ausdehnung (D1) aufweist und der nachfolgende zweite Kommutationsschritt-Abschnitt (Step1.2) eine zweite Ausdehnung (D2) aufweist, welche größer als die erste Ausdehnung (D1) ist,
wobei für jeden Kommutationsschritt während des ersten Kommutationsschritt-Abschnitts (Step1.1) das Verfahren umfasst:
- Anwenden des ersten Signals (E1), konstant über der Zeit, durch die elektronische Steuereinheit (102) sowohl auf das Gate-Terminal des weiteren ersten Transistors (T4), wenn das Pulsweiten-Modulationssignal (PWM) auf den weiteren ersten Transistor in dem nachfolgenden zweiten Kommutationsschritt-Abschnitt (Step1.2) angewendet wird, als auch auf das Gate-Terminal des ersten Transistors (T1), wenn das zweite Signal, konstant über der Zeit, (E2) auf den ersten Transistor in dem nachfolgenden zweiten Kommutationsschritt-Abschnitt (Step1.2) angewendet wird;
- Anwenden des zweiten Signals, konstant über der Zeit, (E2), durch die elektronische Steuereinheit (102), auf die Gate-Terminals des zweiten (T2) und weiteren zweiten (T3) Transistors, wenn das erste Signal (E1), konstant über der Zeit, auf die zweiten Transistoren in dem nachfolgenden zweiten Kommutationsschritt-Abschnitt (Step1.2) angewendet wird,
wobei das erste Signal (E1), konstant über der Zeit, dazu eingerichtet ist, den Strom auszugleichen, welcher von dem ersten und dem weiteren ersten Transistor (T1, T4) des ersten und zweiten Zweigs des Dreiphasen-Inverters geleitet wird, und das zweite Signal (E2), konstant über der Zeit, dazu eingerichtet ist, den Strom zu erhöhen, welcher von dem zweiten und dem weiteren zweiten Transistor (T2, T3) des ersten und zweiten Zweigs des Dreiphasen-Inverters geleitet wird.

8. Verfahren zum Steuern eines Dreiphasen-Inverters (101) nach Ansprüchen 1 oder 7, wobei der erste Kommutationsschritt-Abschnitt (Step1.1) von jedem Kommutationsschritt (Step1) eine erste Ausdehnung (D1) aufweist, welche zwischen 5 und 30 elektrischen Grad beträgt, wobei vorzugsweise die erste Ausdehnung (D1) gleich 10 elektrische Grad ist.

9. Elektronische Vorrichtung (100) zum Steuern der Bewegung eines bürstenlosen Elektromotors (M), umfassend:
- einen Dreiphasen-Inverter (101), welcher dazu eingerichtet ist, den bürstenlosen Elektromotor (M) anzutreiben;
- eine elektronische Steuereinheit (102), welche dazu eingerichtet ist, den Dreiphasen-Inverter (101) in sechs-Schritt-Kommutation zu steuern, indem sie die Schritte des Verfahrens nach einem der Ansprüche 1-8 ausführt.

## Revendications

1. Procédé de commande, selon un schéma de commutation en six étapes, d'un inverseur triphasé (101) conçu pour entraîner un moteur électrique sans balais (M), comprenant les étapes de :
- engendrer, par une unité de commande électronique (102) de l'inverseur triphasé, des signaux de commande comprenant un premier (PWM) et un deuxième (NPWM) signal de modulation de largeur d'impulsion, le deuxième signal de modulation de largeur d'impulsion (NPWM) étant le complémentaire, sur une période T, du premier signal de modulation de largeur d'impulsion (PWM) ;
- appliquer, pendant au moins une partie de chaque étape de commutation (Stepl), par l'unité de commande électronique (102), le premier signal de modulation de largeur d'impulsion (PWM) aux bornes grille de premiers transistors (T1, T4), les premiers transistors étant respectivement le transistor supérieur (T1) d'une première branche (R1) et le transistor inférieur (T4) d'une deuxième branche (R2) ou respectivement le transistor inférieur (T2) de la première branche (R1) et le transistor supérieur (T3) de la deuxième branche (R2), de trois branches qui forment l'inverseur triphasé (101) pour rendre possible le passage d'un courant électrique par les premiers transistors (T1, T4) ;
- appliquer pendant au moins une partie de chaque étape de commutation (Stepl), par l'unité de commande électronique (102), le deuxième signal de modulation de largeur d'impulsion (NPWM) aux bornes grille de deuxièmes transistors (T2, T3) de la première (R1) et de la deuxième branche (R2) des trois branches qui forment l'inverseur triphasé (101), les deuxièmes transistors étant différents des premiers transistors, pour rendre impossible le passage d'un courant électrique par les deuxièmes transistors (T2, T3),
**caractérisé par**
- subdiviser, par l'unité de commande électronique (102), chaque étape de commutation (Step1) des six étapes de commutation en une première partie d'étape de commutation (Step1.1) et en une deuxième partie d'étape de commutation (Stepl.2) subséquente,
chaque étape de commutation (Step1) des six étapes de commutation ayant une étendue de 60 degrés électriques et la première partie d'étape de commutation (Step1.1) de chaque étape de commutation ayant une première étendue (D1) et la deuxième partie d'étape de commutation (Step1.2) subséquente ayant une deuxième étendue (D2) supérieure à la première étendue (D1),
pour chaque étape de commutation, pendant la première partie d'étape de commutation (Step1.1), le procédé comprenant :
- appliquer, par l'unité de commande électronique (102), un premier signal (E1 ; PWM--, E1) aux bornes grille des premiers transistors (T1, T4) lorsque le premier signal de modulation de largeur d'impulsion (PWM) est appliqué aux premiers transistors pendant la deuxième partie d'étape de commutation (Step1.2) subséquente,
- appliquer, par l'unité de commande électronique (102), un deuxième signal (E2 ; PWM++, E2) aux bornes grille des deuxièmes transistors (T2, T3) lorsque le deuxième signal de modulation de largeur d'impulsion (NPWM) est appliqué aux deuxièmes transistors pendant la deuxième partie d'étape de commutation (Step1.2) subséquente,
le premier signal (E1 ; PWM--, E1) étant configuré pour au moins réduire le courant passé par les premiers transistors (T1, T4) de la première et deuxième branche de l'inverseur triphasé, et le deuxième signal (E2 ; PWM++, E2) étant configuré pour augmenter le courant passé par les deuxièmes transistors (T2, T3) de la première et de la deuxième branche de l'inverseur triphasé.

2. Procédé de commande d'un inverseur triphasé (101) selon la revendication 1, **caractérisé en ce que** le premier signal (E1) appliqué aux bornes grille des premiers transistors (T1, T4) de la première (R1) et de la deuxième (R2) branche des trois branches qui forment l'inverseur triphasé (101), est un premier signal qui est constant dans le temps et configuré pour désactiver les premiers transistors, le deuxième signal (E2) appliqué aux bornes grille des deuxièmes transistors (T2, T3) de la première et de la deuxième branche de l'inverseur triphasé est un deuxième signal qui est constant dans le temps et configuré pour activer les deuxièmes transistors.

3. Procédé de commande d'un inverseur triphasé (101) selon la revendication 2, **caractérisé en ce que** le premier signal (E1) a une amplitude égale à zéro, le deuxième signal (E2) a une amplitude positive prédéterminée.

4. Procédé de commande d'un inverseur triphasé (101) selon la revendication 1, **caractérisé en ce que** le premier signal coïncide avec :
- un premier signal, constant dans le temps, (E1) ayant une amplitude égale à zéro lorsqu'il est appliqué à la borne grille de l'un des premiers transistors (T1, T4) d'une première et d'une deuxième branche des trois branches de l'inverseur triphasé (101), pour désactiver le premier transistor, et
- un troisième signal de modulation de largeur d'impulsion (PWM--), lorsqu'il est appliqué à la borne de grille de l'autre des premiers transistors (T1, T4) ;
le deuxième signal coïncide avec :
- un deuxième signal, constant dans le temps, (E2) ayant une amplitude positive prédéterminée, lorsqu'il est appliqué à la borne grille de l'un des deuxièmes transistors (T2, T3) d'une première et d'une deuxième branche des trois branches de l'inverseur triphasé (101) pour activer le deuxième transistor, et
- un quatrième signal de modulation de largeur d'impulsion (PWM++), lorsqu'il est appliqué à la borne de grille de l'autre des deuxièmes transistors (T2, T3).

5. Procédé de commande d'un inverseur triphasé (101) selon la revendication 4, **caractérisé en ce que** le troisième signal de modulation de largeur d'impulsion (PWM--) a un facteur de fonctionnement inférieur au facteur de fonctionnement associé au premier signal de modulation de largeur d'impulsion (PWM).

6. Procédé de commande d'un inverseur triphasé (101) selon la revendication 4, **caractérisé en ce que** le quatrième signal de modulation de largeur d'impulsion (PWM++) a un facteur de fonctionnement supérieur au facteur de fonctionnement associé au premier signal de modulation de largeur d'impulsion (PWM).

7. Procédé de commande, selon un schéma de commutation en six étapes, d'un inverseur triphasé (101) conçu pour entraîner un moteur électrique sans balais (M), comprenant :
- engendrer, par une unité de commande électronique (102) de l'inverseur triphasé, des signaux de commande comprenant :
un signal de modulation de largeur d'impulsion (PWM),
un premier signal, constant dans le temps, (E1) ayant une amplitude égale à zéro,
un deuxième signal, constant dans le temps, (E2) ayant une amplitude positive prédéterminée,
- appliquer, pendant au moins une partie de chaque étape de commutation (Stepl), par l'unité de commande électronique (102) :
le deuxième signal, constant dans le temps, (E2) a la borne grille d'un premier transistor (T1) d'une première branche (R1) des trois branches qui constituent l'inverseur triphasé, pour rendre possible le passage d'un courant électrique par le premier transistor,
le signal de modulation de largeur d'impulsion (PWM) à la borne grille d'un autre premier transistor (T4) d'une deuxième branche (R2) des trois branches qui constituent l'inverseur triphasé, pour rendre possible le passage d'un courant électrique par ledit autre premier transistor,
le premier signal (E1), constant dans le temps, aux bornes grille d'un deuxième (T2) et d'un autre deuxième (T3) transistor respectivement de la première (R1) et de la deuxième (R2) branche de l'inverseur triphasé pour rendre impossible le passage d'un courant électrique par ledit deuxième et l'autre deuxième transistor,
le premier transistor et l'autre premier transistor étant respectivement le transistor supérieur (T1) d'une première branche (R1) et le transistor inférieur (T4) d'une deuxième branche (R2) ou respectivement le transistor inférieur (T2) de la première branche (R1) et le transistor supérieur (T3) de la deuxième branche (R2),
le deuxième transistor et l'autre deuxième transistor étant les autres transistors de la première branche (R1) et de la deuxième branche (R2) ;
**caractérisé par**
- subdiviser, par l'unité de commande électronique (102), chaque étape de commutation (Step1) des six étapes de commutation en une première partie d'étape de commutation (Step1.1) et en une deuxième partie d'étape de commutation (Step1.2) subséquente,
chaque étape de commutation (Step1) des six étapes de commutation ayant une étendue de 60 degrés électriques et la première partie d'étape de commutation (Step1.1) de chaque étape de commutation ayant une première étendue (D1) et la deuxième partie d'étape de commutation (Step1.2) subséquente ayant une deuxième étendue (D2) supérieure à la première étendue (D1),
pour chaque étape de commutation, pendant la première partie d'étape de commutation (Step1.1), le procédé comprenant :
- appliquer, par l'unité de commande électronique (102), le premier signal (E1), constant dans le temps, aussi bien à la borne grille de l'autre premier transistor (T4) lorsque le premier signal de modulation de largeur d'impulsion (PWM) est appliqué audit autre premier transistor pendant la deuxième partie d'étape de commutation (Step1.2) subséquente, qu'à la borne grille du premier transistor (T1) lorsque le deuxième signal, constant dans le temps, (E2) est appliqué au premier transistor pendant la deuxième partie d'étape de commutation (Step1.2) subséquente ;
- appliquer, par l'unité de commande électronique (102), le deuxième signal, constant dans le temps, (E2) aux bornes grille du deuxième (T2) et de l'autre deuxième (T3) transistor lorsque le premier signal (E1), constant dans le temps, est appliqué aux deuxièmes transistors pendant la deuxième partie d'étape de commutation (Step1.2) subséquente,
le premier signal (E1), constant dans le temps, étant configuré pour arrêter le courant passé par le premier et l'autre premier transistor (T1, T4) de la première et deuxième branche de l'inverseur triphasé, et le deuxième signal (E2), constant dans le temps, étant configuré pour augmenter le courant passé par le deuxième et par l'autre deuxième transistor (T2, T3) de la première et de la deuxième branche de l'inverseur triphasé.

8. Procédé de commande d'un inverseur triphasé (101) selon la revendication 1 ou 7, **caractérisé en ce que** la première partie d'étape de commutation (Step 1.1) de chaque étape de commutation (Step1) présente une première étendue (D1) comprise entre 5 et 30 degrés électriques, de préférence, la première étendue (D1) est égale à 10 degrés électriques.

9. Appareil électronique (100) pour commander le mouvement d'un moteur électrique sans balais (M), comprenant :
- un inverseur triphasé (101) configuré pour entraîner le moteur électrique sans balais (M),
- une unité de commande électronique (102) configurée pour commander en six étapes de commutation l'inverseur triphasé (101) en mettant en œuvre les étapes du procédé selon l'une des revendications 1 à 8.
